(19) Europäisches Patentamt / European Patent Office / Office européen des brevets

(11) **EP 2 017 988 B1**

## (12) EUROPEAN PATENT SPECIFICATION

(45) Date of publication and mention
of the grant of the patent:
**19.01.2011 Bulletin 2011/03**

(51) Int Cl.:
***H04J 3/06*** *(2006.01)*      ***H04L 12/56*** *(2006.01)*

(21) Application number: **07425440.0**

(22) Date of filing: **18.07.2007**

(54) **A method and system for transmitting data over PDH channels and corresponding computer program product**

Verfahren und System zur Datenübertragung via PDH-Kanälen und entsprechendes Computerprogramm

Procédé et système de transmission de données au travers de canaux PDH et programme informatique correspondant

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**21.01.2009 Bulletin 2009/04**

(73) Proprietor: **Nokia Siemens Networks S.p.A.**
**20126 Milano (IT)**

(72) Inventor: **Bottiroli, Andrea**
**20060 Gorgonzola (MI) (IT)**

(74) Representative: **Kley, Hansjörg et al**
**Nokia Siemens Networks GmbH & Co. KG**
**COO RTP IPR**
**Patent Administration**
**80240 München (DE)**

(56) References cited:
- **"GFP frame mapping into Plesiochronous Digital Hierarchy (PDH); G.8040/Y.1340 (09/05)" ITU-T STANDARD IN FORCE (I), INTERNATIONAL TELECOMMUNICATION UNION, GENEVA, CH, no. G8040/Y1340 9/5, 6 September 2005 (2005-09-06), XP017404625**
- **"Generic framing procedure (GFP); G.7041/Y. 1303 (08/05)" ITU-T STANDARD IN FORCE (I), INTERNATIONAL TELECOMMUNICATION UNION, GENEVA, CH, no. G7041/Y1303 8/5, 22 August 2005 (2005-08-22), XP017404569**
- **"Application Note 3849 - Ethernet-over-PDH Technology Overview" DALLAS SEMICONDUCTOR MAXIM, [Online] 30 May 2006 (2006-05-30), XP002459059 Retrieved from the Internet: URL:http://pdfserv.maximic.com/en/an/AN38 49.pdf> [retrieved on 2007-11-16]**
- **CHEN WENTAO ET AL.: "Performance Analysis of Two Ethernet over E1 Schemes" TSINGHUA SCI. TECH.; TSINGHUA SCIENCE AND TECHNOLOGY, vol. 12, no. 1, February 2007 (2007-02), pages 70-76, XP002458889 State Key Laboratory on Microwave and Digital Communication Department of Electronic Engineering Tsinghua University, Beijing, 100084, China ISSN: 1007-0214**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Field of the invention

The invention relates to techniques for transmitting data over Plesiochronous Digital Hierarchy (PDH) channels.

Description of the related art

Properly managing communication networks adapted to handle multi-standard traffic (i.e. hybrid network standards) is an ever increasing requirement and conventional technology-specific interface solutions become increasingly insufficient for that purpose. VLPoverPDH provides a generic mechanism to adapt variable length packet (VLP) traffic to a PDH transport network. For that purpose VLP signals need be mapped onto the different Plesiochronous Digital Hierarchy (PDH) signals.

The ITU-T G.7041 Recommendation defines a Generic Framing Procedure (GFP) to delineate octet-aligned, variable-length payloads from higher-level client signals for subsequent mapping into octet synchronous paths. The definitions provided in the Recommendation include the frame formats for protocol data units (PDUs) transferred between GFP initiation and termination points, and the mapping procedure for the client signals into GFP.

Specifically, two kinds of GFP frames are defined: GFP client frames and GFP control frames; frame formats for GFP client and control frames are defined. GFP also supports a flexible (payload) header extension mechanism to facilitate the adaptation of GFP for use with diverse transport mechanisms. Various payload extension header types are specified.

The basic signal structure for GFP client frames provides for GFP frames that are octet-aligned and consist of a GFP Core Header and, except for GFP Idle frames, a GFP Payload Area. The four octets of the GFP Core Header consist of a 16-bit Payload Length Indicator field and a 16-bit Core Header Error Check (cHEC) field. This header allows GFP frame delineation independent of the content of the higher layer PDUs.

The GFP Payload Area, which is comprised of all the octets in the GFP frame after the GFP Core Header, is used to convey higher layer specific protocol information. This variable length area may include from 4 to 65535 octets. The GFP Payload Area consists of two common components: a Payload Header and a Payload Information field. An optional Payload FCS (pFCS) field is also supported. The Payload Header is a variable-length area, 4 to 64 octets long, intended to support data link management procedures specific to the higher-layer client signal.

The structure of the GFP Payload Header provides for an area containing two mandatory fields, the Type and the tHEC fields, and a variable number of additional payload header fields. This group of additional payload header fields is referred to as the Extension Header. The presence of the Extension Header, and its format, and the presence of the optional Payload FCS are specified by the Type field. The tHEC protects the integrity of the Type field.

The Payload Information field contains the framed PDU for frame mapped GFP or, in the case of transparent GFP, a group of client signal characters. This variable length field may include from 0 to 65535-X octets, where X is the size of the Payload Header. This field may include an optional Payload FCS field. The client PDU/signal is always transferred into the GFP Payload Information field as an octet-aligned packet stream.

Scrambling of the GFP Payload Area is required to provide security against payload information replicating scrambling word (or its inverse) from a frame synchronous scrambler such as those used in the SDH RS layer or in an OTN OPUk channel. All octets in the GFP Payload Area are scrambled using a $1 + x^{43}$ self-synchronous scrambler. Scrambling is done in network bit order.

GFP control frames are used in the management of the GFP connection. The only control frame specified at this time is the GFP Idle frame. The GFP Idle frame is a special four-octet GFP control frame consisting of only a GFP Core Header with the PLI and cHEC fields (see 6.1.1) set to 0, and no Payload Area. The Idle frame is intended for use as a filler frame for the GFP source adaptation process to facilitate the adaptation of the GFP octet stream to any given transport medium where the transport medium channel has a higher capacity than required by the client signal.

More specifically, the invention relates to a method according to the preamble of claim 1, which is know, e.g from "GFP frame mapping into Plesiochronous Digital Hierarchy (PDH); G.8040/Y.1340 (09/05)" ITU-T STANDARD IN FORCE (I), INTERNATIONAL TELECOMMUNICATION UNION, GENEVA, CH, no. G8040/Y1340 9/5, 6 September 2005 (2005-09-06), XP017404625.

Other documents such as : "Generic framing procedure (GFP); G.7041/Y.1303 (08105)" ITU-T STANDARD IN FORCE (I), INTERNATIONAL TELECOMMUNICATION UNION, GENEVA, CH, no. G7041/Y1303 8/5, 22 August 2005 (2005-08-22), XP017404569 (already discussed in the foregoing, and), "Application Note 3849 - Ethernet-over-PDH Technology Overview" DALLAS SEMICONDUCTOR MAXIM, [Online] 30 May 2006 (2006-05-30), XP002459059 Retrieved from the Internet: URL:http://pdfserv.maximic.com/en/an/AN38 49.pdf> [retrieved on 2007-11-16], are also of interest for the invention.

Object and summary of the invention

A basic drawback of the arrangement described in the foregoing, when applied to networks required to handle lies in the inherent complexity of its control (i.e. header) structure.

The object of the invention is thus to provide an arrangement which may overcome such a drawback.

According to the present invention, that object is achieved by means of a method having the features set forth in claim 1 that follows. The invention also relates to a corresponding system as called for in claim 15 as well as a corresponding computer program product as called for in claim 16, loadable in the memory of at least one computer and including software code portions for performing the steps of the method of the invention when the product is run on a computer. As used herein, reference to such a computer program product is intended to be equivalent to reference to a computer-readable medium containing instructions for controlling a computer system to coordinate the performance of the method of the invention. Reference to "at least one computer" is evidently intended to highlight the possibility for the present invention to be implemented in a distributed/ modular fashion.

The claims are an integral part of the disclosure of the invention provided herein.

A preferred embodiment of the arrangement described herein is thus a method of transmitting a Variable Length Packet (VLP) input data flow over a Plesiochronous Digital Hierarchy (PDH) channel, including the step of mapping said Variable Length Packet input data flow into a continuous packet flow for transmission over the Plesiochronous Digital Hierarchy channel; the continuous packet flow includes a sequence of partitioning bit strings wherein at least one bit string in a pair of subsequent partitioning bit strings in said sequence is indicative of the length of an associated packet in the continuous packet flow; the method includes the step of inserting in the continuous packet flow a safeguard signal for said partitioning bit strings.

In an embodiment, the partitioning bit strings are in the form of pointers that indicate the length of an associated packet in the continuous packet flow by pointing to a "next" pointer associated to a subsequent packet in the flow. In this case, the safeguard signal is a frame period signal that permits re-synchronizing the continuous packet flow in case the partitioning strings/pointers are not properly detected.

In an alternative embodiment, the partitioning bit strings are in the form of a unique word (UW) that marks the beginning (or the end) of an associated packet in the continuous packet flow, so that the length of an associated packet is indicated by the distance separating two subsequent unique words in the continuous packet flow. In this case, the safeguard signal may be a bit-long or byte-long signal inserted in the continuous packet flow whenever a bit string is detected in the continuous packet flow which "emulates" a unique word, so that such an "emulating" bit string cannot be erroneously taken as a unique word that marks the beginning of an associated packet.

Brief description of the annexed drawings

The invention will now be described, by way of example only, with reference to the enclosed figures of drawing, wherein:

- Figure 1 is representative of the sequence of steps involved in transforming a VLP input data flow into a continuous packet flow for transmission over a PDH channel according to a first embodiment of the arrangement described herein;
- Figure 2 further details the insertion of a safeguard signal in the continuous packet flow produced according to the arrangement of figure 1;
- Figure 3 further illustrates the details of certain signals used in the arrangement of figures 1 and 2;
- Figure 4 is representative of the sequence of steps involved in transforming a VLP input data flow into a continuous packet flow for transmission over a a PDH channel according to a second embodiment of the arrangement described herein;
- Figure 5 further illustrates the details of certain signals used in the arrangement of figure 4;
- Figure 6 details the insertion of a safeguard signal in the continuous packet flow in a variant of the arrangement of figure 4; and
- Figure 7 illustrates the details of certain signals used in the arrangement of figure 6.

Detailed description of preferred embodiments

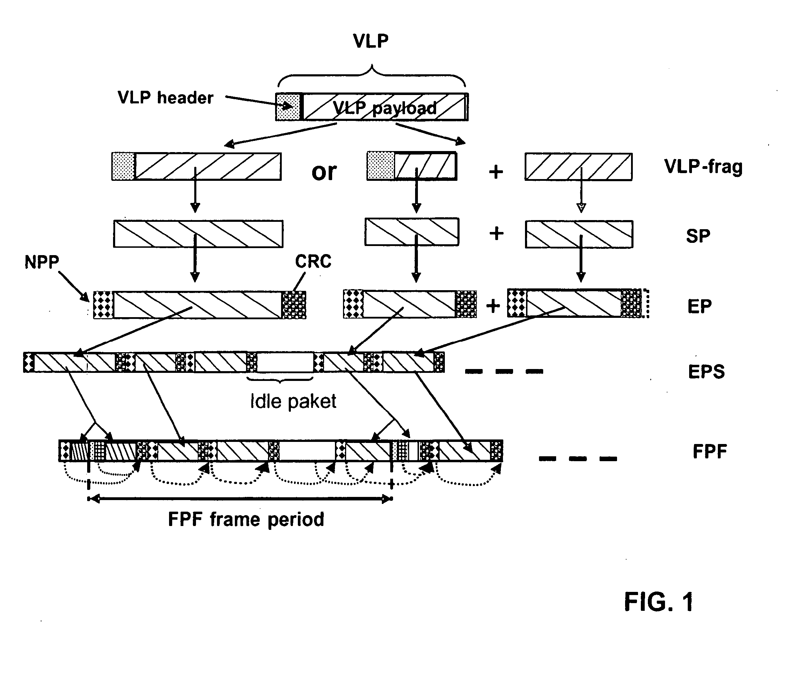

Figure 1 is a functional diagram illustrative of a sequence of steps taken for mapping a Variable Length Packet (VLP) signal into a specific framing adapted for transporting the Variable Length Packet signal, as an Ethernet signal over one or more PDH signals forming e.g. a Virtual Concatenated Containers Group (VCCG) by means of container aggregation.

As a first step, each packet in the Variable Length Packet input flow (which packet is usually comprised of a VLP header and a VLP payload) is subdivided into VLP Fragments (VLP-frag) of maximum size equal to e.g. 1024 bytes, forming what is designated in figure 1 a flow of Simple Packets (SPs).

As schematically depicted in the left-hand portion of figure 1, only VLP packets having a length in excess of the fragmentation threshold (e.g. 1024 bytes) are actually fragmented. VLP packets that are "shorter" than the fragmentation threshold are not fragmented and are passed on directly in the flow of Simple Packets (SPs).

Then a bit string in the form of a preamble, such as a two byte preamble, designated a First/Next Packet Pointer (NPP), is added in order to obtain an Extended Packet (EP). At the same time, a CRC (Cyclic Redundancy Code) can be - optionally - added at the end of each Simple Packet SP.

The Extended Packets EP are linked up to form an Extended Packet Sequence (EPS) and finally the Extended Packet Sequence is mapped into a Framed Packet Flow (FPF) frame with a length equal to 1024 bytes.

If a "hole", i.e. a discontinuity is present in the Extended Packet Sequence one (or more) idle packets are inserted in the Extended Packet Sequence to ensure continuity of the final Framed Packet Flow, i.e. to ensure that the final Framed Packet Flow is exempt from discontinuities. The idle packet length is typically 2 to 1024 byte (i.e. the fragmentation threshold).

The Framed Packet Flow (FPF) frame is typically comprised of "Unique Words" (UWs) i.e. synchronization/framing bits that act as a safeguard signal for the Next Packet Pointer structure, by causing each Unique Word in the Framed Packet Flow (FPF) to be followed by a "first" Next Packet Pointer - indicated simply as a First Packet Pointer (FPP) in the drawing.

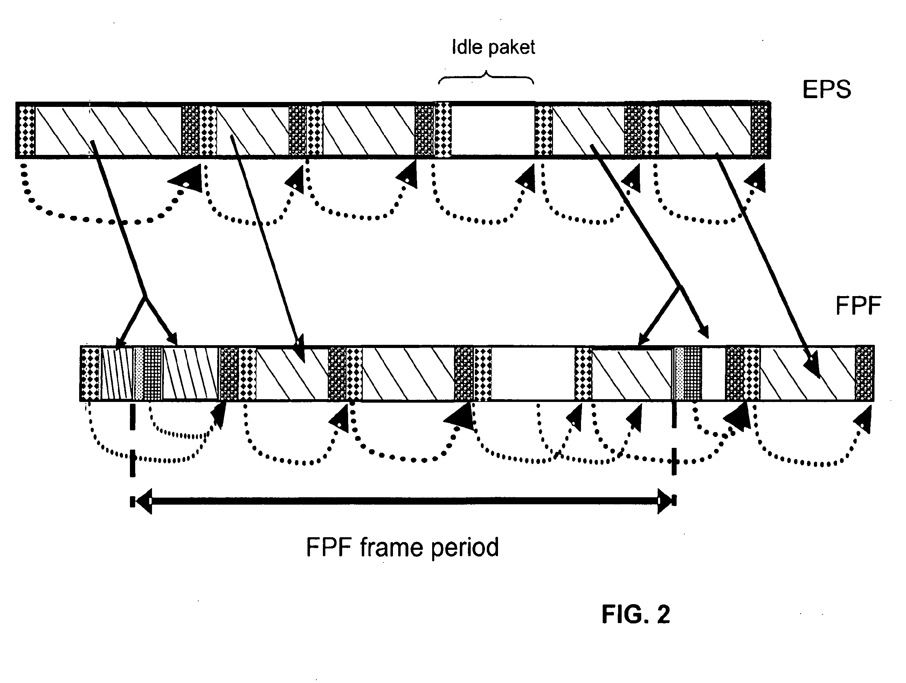

As better detailed in figure 2, any accidental loss of proper alignment of the FPP/NPP pointers - which act as partitioning bit strings between subsequent packets in the Extended Packet Sequence - leading to an erroneous pointer mechanism to the leading ends of the packets in the Extended Packet Sequence is rapidly recovered.

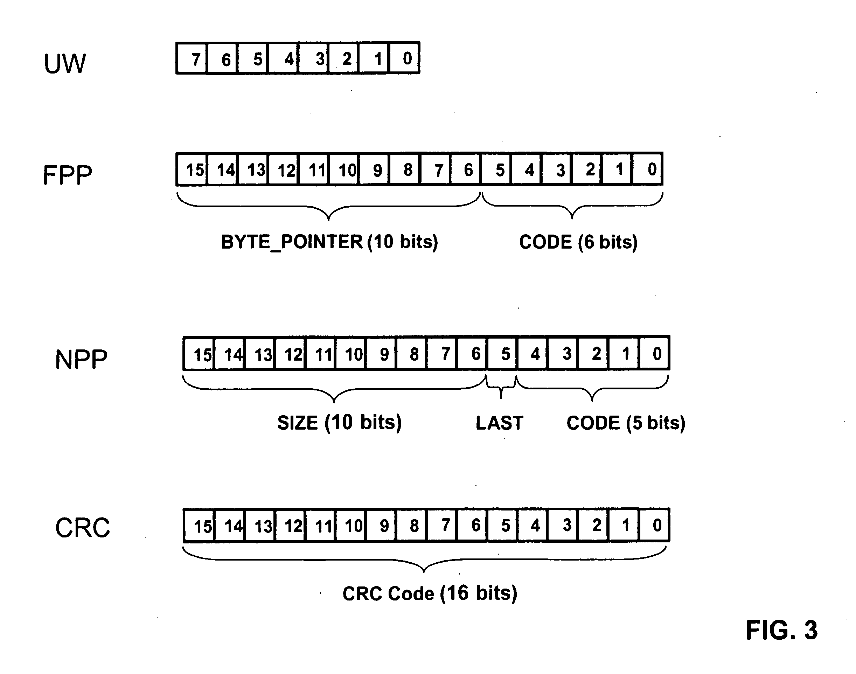

Each unique word UW (see figure 3) included in the FPF frame arrangement will in fact re-set that mechanism by making sure that the first packet pointer occurring in the Framed Packet Flow after a unique word UW will be used as a First Packet Pointer (FPP) to re-start the pointer mechanism, which will be thus safeguarded against errors. Typically, the FPP/NPP fields are arranged as shown in figure 3. In the exemplary embodiment shown, the FPP bit string is comprised of a "BYTE_POINTER" field that indicates the first NPP byte after the associated packet and a "CODE" field (6 bits) that contains the error correction code, e.g. a Hamming (16,10,6) code. The first 10 bits in the NPP bit string indicate the size SP "SIZE" (i.e. again an indication of the length) of the subsequent associated packet. A "LAST" bit is then typically provided in the NPPs to indicate if the associated packet is part of a bigger packet that has been split (fragmented). Again, a "CODE" field is provided containing a linear block code as an error correction code for the previous bits.In a preferred embodiment, a combination of a (15, 11) Hamming code proper and 5 parity bits is used which e.g. is able to correct a single error and detect up to two errors.The exemplary FPF frame illustrated in the drawings is thus comprised of 1024 bytes: the first byte is the unique word (UW) byte, added for safeguard/synchronization purposes, while the second and third bytes form the so called First Packet Pointer (FPP) and are used to indicate the first byte in the frame that accommodate one NPP. This arrangement provides a give a simple way of finding Extended Packets (EPs) within the frame. By direct comparison with the ITU-T standard G.7041, the frame structure just described makes it possible to safeguard the EPS alignment when a NPP is received corrupted. At the same time, the introduction of an error correction code within the NPP and FPP minimizes EP alignment loss inside FPF frame. These results are achieved by substantially reducing the overhead in comparison with the ITU-T standard G.7041 without adversely affecting the quality of transmission.

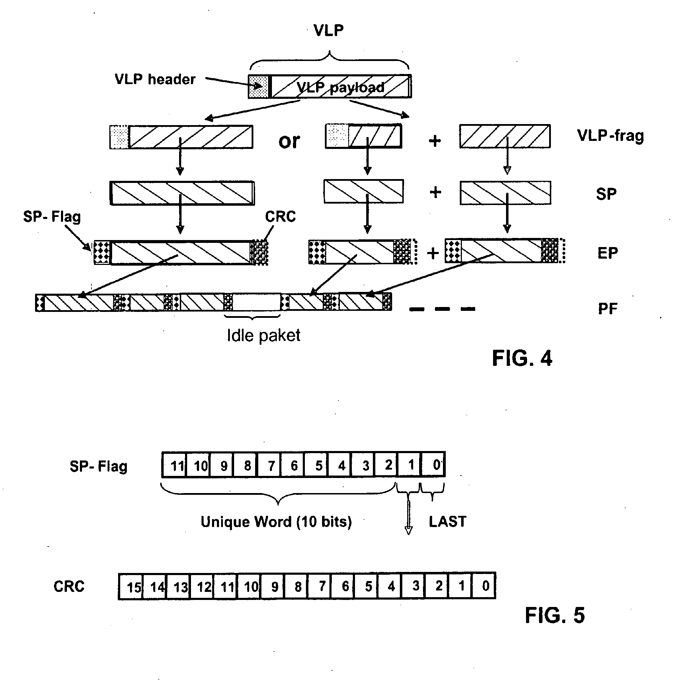

Figures 4 to 7 in the drawing are representative of an alternative approach based on flag separation of packets. This approach may in turn rely on two different solutions (bit processing or byte processing) to provide a safeguard signal.

In the arrangement shown in figure 4, no VLP packet maximum size is foreseen, while packet segmentation (VLP-frag) is still admitted.

After having generated a Simple Packet (SP) flow - essentially along the lines of the process already described in connection with figure 1, a Simple Packet Flag (SP-Flag) is inserted at the leading end of each packet in order to obtain an Extended Packet (EP). As in the case of the first embodiment described previously, a CRC code may be optionally added at the leading end of the packet.

The SP-Flag includes again a "Unique Word" (UW) plus a "Distinguish" bit and a "LAST" bit.

During this step, possible Unique Word emulations (i.e. sequences of bits that accidentally reproduce the Unique Word) are searched within the Simple Packet P flow - e.g. by means of a "sliding" window - and an Inverse Distinguish bit (i.e. a bit set to the complementary value of the Distinguish bit included in the SP-Flag) is inserted after any occurrence of such an emulation.

The Extended Packets thus formed are linked to form a Packet Flow (PF). Again, if a "hole", i.e. a discontinuity, is present in the Extended Packet Sequence one (or more) idle packets are inserted in the Extended Packet Sequence so that the resulting Packet Flow is exempt from discontinuities.

Typically, the SP-Flag field is configured as illustrated in figure 5. The first 10 bits reproduce the Unique Word, then the Distinguish bit is inserted and finally there is a "LAST" bit to indicate if te packet is part of a bigger packet that has been split up.

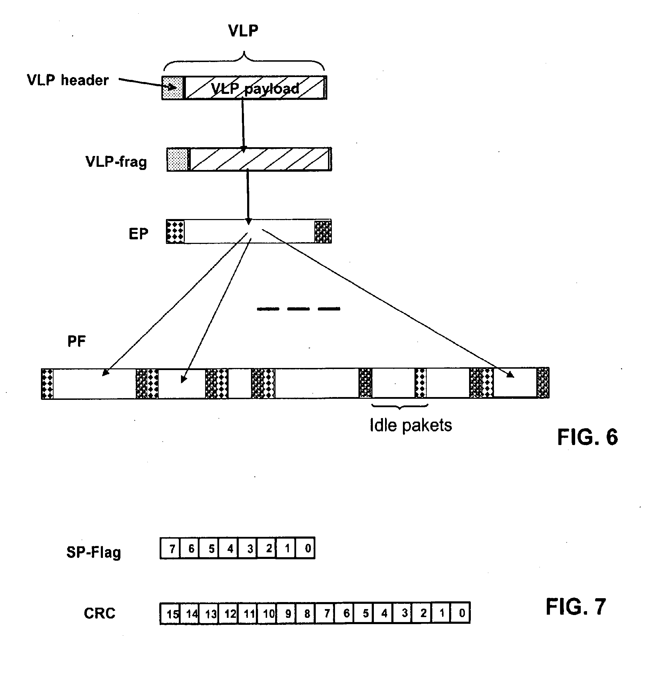

In the alternative approach of figures 6 and 7, no VLP packet maximum size is foreseen and packet segmentation is not generally allowed, so that each VLP packet will generally map into one Simple Packet (SP). Once the Simple Packet flow is generated, in order to obtain an Extended Packet (EP), a SP-Flag that represents the "Unique Word" (UW) is again added at the leading end of each the Simple Packet, while a CRC-16 tail is optionally added after at the trailing end.

During this step, a byte stuffing technique is used to avoid idle flags into the Extended Packet stream.

In so doing, two basic rules are enforced:

- each "emulation" of the Unique Word is replaced by the sequence Inserted Byte (IB) - UW Distinguish Byte (UW_DB);
- each occurrence of the Inserted Byte IB is replaced by the sequence IB - IB Distinguish Byte (IB_DB).

UW_DB and IB_DB are calculated by X-oring (i.e. via an Exclusive-OR operation) DB and IB with Xoring Byte (XB) that is:

UW_DB = UW xor XB;
IB_DB = IB xor XB.

For instance, choosing UW = 0x7E, DB = 0x7D and XB = 0x20 the two basic rules are:

- each 0x7E occurrence is replaced by the sequence 0x7D 0x5E (Ox7E xor 0x20);
- each 0x7D occurrence is replaced by the sequence 0x7D 0x5D (Ox7D xor 0x20).

The CRC-16 value is calculated over the data bytes before the stuffing process. So, the byte stuffing is performed without effects over the CRC-16 value. To perform the CRC-16 calculation, the initial value is set to 0xFFFF and the polynomial $X^{16} + X^{12} + X^5 + X^0$ is used to calculate the final result. This value is inverted (logical "NOT") and inserted after the packet data with MSB sent first.

The Extended Packets are then linked to form the output Packet Flow (PF) to be used for transmission. When no VLP packet is present, one idle packet, formed by a single 0x7E byte, is joined to the PF.

With all the arrangements described, no packet maximum size is foreseen. Moreover, in the case of the "framed" arrangement of figures 1 to 3, packet alignment is highly insensitive to Bit Error Rate and information on packet length is directly available via the First/Next Packet Pointer mechanism. If a control flag (e.g. CRC-16) is present, all the procedures described can control packet error and packets discard.

Additionally, different values for the Real Throughput (i.e. throughput of the incoming VLP signal) can be assured as a function of Theoretic Throughput (depending on PDH signal chosen) and Average Packet Length. The Segmentation And Reassembling (SAR) operations - if performed - lead to a relatively minor throughput degradation that can easily be calculated in all cases (the values refer to arrangements without CRC insertion).

In the case of the arrangement of figures 1 to 3:

$$\text{Throughput}_{REAL} = \frac{1021}{1024} \times \frac{AvPacketSize}{AvPacketSize + 2} \times \text{Throughput}_{TEO}$$

In the case of the arrangement of figures 4 and 5, when '1s' and '0s' are equally probable:

$$\text{Throughput}_{REAL} = \frac{(1/2)^{10}}{(1/2)^{10} + 1} \times \frac{AvPacketSize}{AvPacketSize + (12/8)} \times \text{Throughput}_{TEO}$$

Finally, in the case of the arrangement of figures 6 and 7, again when '1s' and '0s' are equally probable:

$$\text{Throughput}_{REAL} = \frac{(1/2)^7}{(1/2)^7 + 1} \times \frac{AvPacketSize}{AvPacketSize + 1} \times \text{Throughput}_{TEO}$$

Different performance levels can be achieved with the various arrangements described in the foregoing, and different choices may be made in different context. -GFP.

Both Packet Flow (PF) and Framed Packet Flow (FPF) signals generated as described in the foregoing can be mapped e.g. into one or more E1 (2048 Kbit/s) PDH signals. Preferably, this result can be achieved by resorting to the arrangement discloses in a co-pending application filed on even date by the same applicant.

All the processing steps illustrated in figures 1, 5, and 6 can be performed by resorting to a dedicated processor system or a general purpose processor system suitably programmed (according to criteria that are known per se) to perform those processing steps.

In terms of Maximum Packet Length the GFP Payload Area is a variable length area that may include from 4 to 65535 octets. This means that packets of size up to 65535 bytes can be mapped into GFP packets as described herein.

Without prejudice to the underlying principles of the invention, the details and the embodiments may vary, even appreciably, with reference to what has been described by way of example only, without departing from the scope of the invention as defined by the annexed claims.

**Claims**

1. A method of transmitting a Variable Length Packet (VLP) input data flow over a Plesiochronous Digital Hierarchy (PDH) channel, the method including the step of mapping said Variable Length Packet input data flow into a continuous packet flow (FPF; PF) for transmission over said Plesiochronous Digital Hierarchy channel, said continuous packet flow (FPF; PF) including a sequence of partitioning bit strings wherein at least one bit string in a pair of said subsequent partitioning bit strings in said sequence is indicative of the length of an associated packet in said continuous packet flow,
   **characterized in that** the method includes the step of inserting in said continuous packet flow a safeguard signal for said partitioning bit strings by:

   - a) providing in said partitioning bit strings pointers (FPP, NPP) comprising a pointing mechanism wherein each said pointer points to a subsequent pointer in said continuous packet flow; and providing said safeguard signal as a frame signal with a fixed frame period (FPF) whereby said pointing mechanism is re-set at each frame of said frame signal, or
   - b) providing said partitioning bit strings in the form of a unique word (UW) marking the beginning or the end of an associated packet in said continuous packet flow, and providing in said partitioning bit strings flags (SP-Flag) each identificative of the presence of said associated packet in said continuous packet flow; and providing said safeguard signal as a distinguishing signal for distinguishing said flags over any emulations thereof in said continuous packet flow.

2. The method of claim 1, further including the step of transmitting said continuous packet flow over one or more Plesiochronous Digital Hierarchy channels.

3. The method of either of claims 1 or 2, including the step of adding a Cyclic Redundancy Code (CRC) to the packets in said continuous packet flow.

4. The method of any of claims 1 to 3, including the step of including idle packets in said continuous packet flow (FPF; PF) to ensure continuity thereof.

5. The method of any of the previous claims, including the step of subjecting said packets in said Variable Length Packet input flow (VLP) to fragmentation (VLP-Frag) whereby packets longer than a given fragmentation threshold are fragmented into packets shorter than said fragmentation threshold in view of mapping into said continuous packet flow.

6. The method of claim 5, including the step of including in said partitioning strings at least one bit (LAST) indicative of the fact that the associated packet is part of a longer packet that has been subject to fragmentation.

7. The method of claim 1, wherein each frame of said frame signal (FPF) frames a First Packet Pointer (FPP) followed by a set of Next Packet Pointers (NPP).

8. The method of claim 5, wherein said fragmentation threshold and said fixed frame period are identical.

9. The method of claim 8, wherein said fragmentation threshold and said fixed frame period are equal to 1024 bytes.

10. The method of claim 1, including the step of adding in said partitioning strings wherein said pointers (FPP, NPP) are provided an error correction code (CODE) for the pointers in said partitioning strings.

11. The method of claim 10, wherein said error correction code (CODE) is selected as a code permitting correction of at least one errored bit and detection of up to two errored bits in the pointers in said partitioning strings.

12. The method of claim 1, including the steps of:

   - associating with each said flag (SP-Flag) a distinguishing bit,
   - searching said continuous packet flow for any emulations of said flag; and
   - associating with any emulation found in said searching an inverse distinguishing bit with a value complementary to said distinguishing bit.

13. The method of claim 1, including the steps of:

   - searching said continuous packet flow for any emulations of said flags;
   - replacing any flag emulation found in said searching by a sequence of an Inserted Byte (IB) and a Flag Distinguishing Byte (UW_DB);
   - searching in said continuous packet flow any emulations of said Inserted Byte (IB); and
   - replacing any emulation of said Inserted Byte IB located in said searching by a sequence of said Inserted Byte (IB) and an Inserted Byte Distinguish Byte (IB_DB).

14. The method of claim 13, wherein said Flag Distinguishing Byte (UW_DB) and said Inserted Byte Distinguish Byte (IB_DB) are calculated by X-oring said Flag (UW) and said Inserted Byte IB with an Xoring Byte (XB).

15. A system for transmitting a Variable Length Packet (VLP) input data flow over a Plesiochronous Digital Hierarchy (PDH) channel, the system being configured to perform the method any of claims 1 to 14.

16. A computer program product, directly loadable in the memory of at least one computer and including software code portions for performing the method of any of claims 1 to 14.

**Patentansprüche**

1. Verfahren zum Übertragen eines Eingangsdatenflusses des Typs Variable Length Packet (VLP) über einen Kanal der Plesiochronen Digitalen Hierarchie (PDH), wobei das Verfahren den Schritt des Abbildens des Eingangsdatenflusses des Typs Variable Length Packet in einen kontinuierlichen Paketfluss (FPF; PF) zur Übertragung über den Kanal der Plesiochronen Digitalen Hierarchie umfasst, wobei der kontinuierliche Paketfluss (FPF; PF) eine Sequenz von Partionierungsbitketten umfasst, wobei mindestens eine Bitkette in einem Paar der nachfolgenden Partionierungsbitketten in der Sequenz die Länge eines assoziierten Pakets in dem kontinuierlichen Paketfluss angibt, **dadurch gekennzeichnet, dass** das Verfahren den Schritt des Einfügens eines Absicherungssignals für die Partionierungsbitketten in den kontinuierlichen Paketfluss durch Folgendes umfasst:

   - a) Bereitstellen von Zeigern (FPP, NPP) in den Partionierungsbitketten, die einen Zeigemechanismus umfassen, wobei jeder Zeiger auf einen nachfolgenden Zeiger in dem kontinuierlichen Paketfluss zeigt; und Bereitstellen des Absicherungssignals als ein Rahmensignal mit einer festen Rahmenperiode (FPF), wobei der Zeigemechanismus an jedem Rahmen des Rahmensignals rückgesetzt wird, oder
   - b) Bereitstellen der Partionierungsbitketten in Form eines einzigartigen Worts (UW), das den Anfang oder das Ende eines assoziierten Pakets in dem kontinuierlichen Paketfluss markiert, und Bereitstellen von Flags (SP-Flag) in den Partionierungsbitketten, die jeweils die Anwesenheit des assoziierten Pakets in dem kontinuierlichen Paketfluss identifizieren; und Bereitstellen des Absicherungssignals als ein Unterscheidungssignal zur Unterscheidung der Flags gegenüber etwaigen Emulationen dieser in dem kontinuierlichen Paketfluss.

2. Verfahren nach Anspruch 1, ferner mit dem Schritt des Übertragens des kontinuierlichen Paketflusses über einen oder mehrere Kanäle der Plesiochronen Digitalen Hierarchie.

3. Verfahren nach einem der Ansprüche 1 oder 2 mit dem Schritt des Hinzufügens eines Cyclic Redundancy Code (CRC) zu den Paketen in dem kontinuierlichen Paketfluss.

**4.** Verfahren nach einem der Ansprüche 1 bis 3 mit dem Schritt des Aufnehmens von Leerlaufpaketen in den kontinuierlichen Paketfluss (FPF; PF) um dessen Kontinuität sicherzustellen.

**5.** Verfahren nach einem der vorhergehenden Ansprüche, wobei die Pakete in dem Eingangsfluss des Typs Variable Length Packet (VLP) einer Fragmentierung (VLP-Frag) unterzogen werden, wobei im Hinblick auf die Abbildung in den kontinuierlichen Paketfluss Pakete, die länger als eine gegebene Fragmentierungsschwelle sind, zu Paketen fragmentiert werden, die kürzer als die Fragmentierungsschwelle sind.

**6.** Verfahren nach Anspruch 5 mit dem Schritt des Aufnehmens mindestens eines Bit (LAST) in die Partionierungsketten, das den Umstand angibt, dass das assoziierte Paket Teil eines längeren Pakets ist, das Fragmentierung unterzogen wurde.

**7.** Verfahren nach Anspruch 1, wobei jeder Rahmen des Rahmensignals (FPF) einen First Packet Pointer (FPP), gefolgt von einer Menge von Next Packet Pointers (NPP), framet.

**8.** Verfahren nach Anspruch 5, wobei die Fragmentierungsschwelle und die feste Rahmenperiode identisch sind.

**9.** Verfahren nach Anspruch 8, wobei die Fragmentierungsschwelle und die feste Rahmenperiode gleich 1024 Byte sind.

**10.** Verfahren nach Anspruch 1 mit dem Schritt des Hineinfügens der Partionierungsketten, wobei die Zeiger (FPP, NPP) einen Fehlerkorrekturkode (CODE) für die Zeiger in den Partionierungsketten erhalten.

**11.** Verfahren nach Anspruch 10, wobei der Fehlerkorrekturkode (CODE) als ein Kode ausgewählt wird, der Korrektur mindestens eines fehlerhaften Bit und Detektion von bis zu zwei fehlerhaften Bit in den Zeigern in den Partionierungsketten gestattet.

**12.** Verfahren nach Anspruch 1, mit den folgenden Schritten:

- Assoziieren eines Unterscheidungsbit mit jedem Flag (SP-Flag),
- Durchsuchen des kontinuierlichen Paketflusses nach etwaigen Emulationen des Flag; und
- Assoziieren eines inversen Unterscheidungsbit mit einem zu dem Unterscheidungsbit komplementären Wert mit jeder bei dem Durchsuchen gefundenen Emulation.

**13.** Verfahren nach Anspruch 1, mit den folgenden Schritten:

- Durchsuchen des kontinuierlichen Paketflusses nach etwaigen Emulationen der Flags;
- Ersetzen jeder bei dem Durchsuchen gefundenen Flag-Emulation durch eine Sequenz eines Inserted Byte (IB) und eines Flag Distinguishing Byte (UW_ DB);
- Suchen in dem kontinuierlichen Paketfluss etwaiger Emulationen des Inserted Byte (IB); und
- Ersetzen jeder bei dem Suchen gefundenen Emulation des Inserted Byte (IB) durch eine Sequenz des Inserted Byte (IB) und eines Inserted Byte Distinguish Byte (IB_ DB).

**14.** Verfahren nach Anspruch 13, wobei das Flag Distinguishing Byte (UW_DB) und das Inserted Byte Distinguish Byte (IB_DB) durch X-or-Verknüpfung des Flag (UW) und des Inserted Byte (IB) mit einem X-or-Verknüpfungsbyte (XB) berechnet werden.

**15.** System zum Übertragen eines Eingangsdatenflusses des Typs Variable Length Packet (VLP) über einen Kanal der Plesiochronen Digitalen Hierarchie (PDH), wobei das System dafür ausgelegt ist, das Verfahren nach einem der Ansprüche 1 bis 14 auszuführen.

**16.** Computerprogrammprodukt, das direkt in den Speicher mindestens eines Computers ladbar ist und Softwarekodeteile zum Ausführen des Verfahrens nach einem der Ansprüche 1 bis 14 umfasst.

**Revendications**

**1.** Procédé de transmission d'un flux de données d'entrée par Paquets de Longueur Variable (VLP) sur un canal à Hiérarchie Numérique Plésiochrone (PDH), le procédé incluant l'étape de mappage dudit flux de données d'entrée par Paquets de Longueur Variable dans un flux de paquets continu (FPF ; PF) pour une transmission sur ledit canal à Hiérarchie Numérique Plésiochrone, ledit flux de paquets continu (FPF ; PF) incluant une séquence de chaînes de bits de partitionnement dans laquelle au moins une chaîne de bits dans une paire desdites chaînes de bits de partitionnement suivantes dans ladite séquence est indicatrice de la longueur d'un paquet associé dans ledit flux de paquets continu,

**caractérisé en ce que** le procédé inclut l'étape d'insertion dans ledit flux de paquets continu d'un signal de sauvegarde pour lesdites chaînes de bits de partitionnement par

- a) la prévision dans lesdites chaînes de bits de partitionnement de pointeurs (FPP, NPP) comprenant un mécanisme de pointage dans lequel chaque dit pointeur pointe un pointeur suivant dans ledit flux de paquets continu ; et la prévision dudit signal de sauvegarde comme un signal de trame avec une période de trame fixe (FPF), d'où il résulte que ledit mécanisme de pointage est réinitialisé à chaque trame dudit signal de trame, ou
- b) la prévision desdites chaînes de bits de partitionnement sous la forme d'un mot unique (UW) marquant le début ou la fin d'un paquet associé dans ledit flux de paquets continu, et la prévision dans lesdites chaînes de bits de partitionnement de fanions (SP-Flag) identifiant chacun la présence dudit paquet associé dans ledit flux de paquets continu ; et la prévision dudit signal de sauvegarde comme un signal de distinction pour distinguer lesdits fanions sur de quelconques émulations de ceux-ci dans ledit flux de paquets continu.

2. Procédé selon la revendication 1, incluant en outre l'étape de transmission dudit flux de paquets continu sur un ou plusieurs canaux à Hiérarchie Numérique Plésiochrone.

3. Procédé selon l'une ou l'autre des revendications 1 ou 2, incluant l'étape d'ajout d'un Code de Redondance Cyclique (CRC) aux paquets dans ledit flux de paquets continu.

4. Procédé selon l'une quelconque des revendications 1 à 3, incluant l'étape d'inclusion de paquets inactifs dans ledit flux de paquets continu (FPF ; PF) pour assurer la continuité de celui-ci.

5. Procédé selon l'une quelconque des revendications précédentes, incluant l'étape de soumission desdits paquets dans ledit flux d'entrée par Paquets de Longueur Variable (VLP) à une fragmentation (VLP-Frag), d'où il résulte que des paquets plus longs qu'un seuil donné de fragmentation sont fragmentés en paquets plus courts que ledit seuil de fragmentation en vue du mappage dans ledit flux de paquets continu.

6. Procédé selon la revendication 5, incluant l'étape d'inclusion dans lesdites chaînes de partitionnement d'au moins un bit (LAST) indicateur du fait que le paquet associé fait partie d'un paquet plus long qui a été soumis à fragmentation.

7. Procédé selon la revendication 1, dans lequel chaque trame dudit signal de trame (FPF) trame un Premier Pointeur de Paquet (FPP) suivi d'un ensemble de Pointeurs de Paquets Suivants (NPP).

8. Procédé selon la revendication 5, dans lequel ledit seuil de fragmentation et ladite période de trame fixe sont identiques.

9. Procédé selon la revendication 8, dans lequel ledit seuil de fragmentation et ladite période de trame fixe sont égaux à 1 024 octets.

10. Procédé selon la revendication 1, incluant l'étape d'ajout, dans lesdites chaînes de partitionnement dans lesquelles lesdits pointeurs (FPP, NPP) sont prévus, d'un code de correction d'erreurs (CODE) pour les pointeurs dans lesdites chaînes de partitionnement.

11. Procédé selon la revendication 10, dans lequel ledit code de correction d'erreurs (CODE) est sélectionné comme un code permettant une correction d'au moins un bit erroné et une détection de jusqu'à deux bits erronés dans les pointeurs dans lesdites chaînes de partitionnement.

12. Procédé selon la revendication 1, incluant les étapes de :

- association avec chaque dit fanion (SP-Flag) d'un bit de distinction,
- recherche dans ledit flux de paquets continu de quelconques émulations dudit fanion ; et
- association avec une quelconque émulation trouvée dans ladite recherche d'un bit de distinction inverse ayant une valeur complémentaire dudit bit de distinction.

**13.** Procédé selon la revendication 1, incluant les étapes de :

- recherche dans ledit flux de paquets continu de quelconques émulations desdits fanions ;
- remplacement d'une quelconque émulation de fanion trouvée dans ladite recherche par une séquence d'un Octet Inséré (IB) et d'un Octet de Distinction de Fanion (UW_DB) ;
- recherche dans ledit flux de paquets continu de quelconques émulations dudit Octet Inséré (IB) ; et
- remplacement d'une quelconque émulation dudit Octet Inséré IB localisée dans ladite recherche par une séquence dudit Octet Inséré (IB) et d'un Octet de Distinction d'Octet Inséré (IB_DB).

**14.** Procédé selon la revendication 13, dans lequel ledit Octet de Distinction de Fanion (UW_DB) et ledit Octet de Distinction d'Octet Inséré (IB_DB) sont calculés par OU exclusif dudit Fanion (UW) et dudit Octet Inséré (IB) avec un Octet de OU Exclusif (XB).

**15.** Système de transmission d'un flux de données d'entrée par Paquets de Longueur Variable (VLP) sur un canal à Hiérarchie Numérique Plésiochrone (PDH), le système étant configuré pour mettre en oeuvre le procédé selon l'une quelconque des revendications 1 à 14.

**16.** Produit de programme informatique, pouvant être directement chargé dans la mémoire d'au moins un ordinateur et incluant des parties de code logiciel pour mettre en ouvre le procédé selon l'une quelconque des revendications 1 à 14.

FIG. 1

Idle paket

EPS

FPF

FPF frame period

FIG. 2

EP 2 017 988 B1

EP 2 017 988 B1

UW

| 7 | 6 | 5 | 4 | 3 | 2 | 1 | 0 |
|---|---|---|---|---|---|---|---|

FPP

| 15 | 14 | 13 | 12 | 11 | 10 | 9 | 8 | 7 | 6 | 5 | 4 | 3 | 2 | 1 | 0 |
|----|----|----|----|----|----|---|---|---|---|---|---|---|---|---|---|

BYTE_POINTER (10 bits)          CODE (6 bits)

NPP

| 15 | 14 | 13 | 12 | 11 | 10 | 9 | 8 | 7 | 6 | 5 | 4 | 3 | 2 | 1 | 0 |
|----|----|----|----|----|----|---|---|---|---|---|---|---|---|---|---|

SIZE (10 bits)          LAST     CODE (5 bits)

CRC

| 15 | 14 | 13 | 12 | 11 | 10 | 9 | 8 | 7 | 6 | 5 | 4 | 3 | 2 | 1 | 0 |
|----|----|----|----|----|----|---|---|---|---|---|---|---|---|---|---|

CRC Code (16 bits)

FIG. 3

FIG. 4

FIG. 5

VLP

VLP header → VLP payload

VLP-frag

EP

PF

Idle pakets

FIG. 6

SP-Flag | 7 | 6 | 5 | 4 | 3 | 2 | 1 | 0 |

CRC | 15 | 14 | 13 | 12 | 11 | 10 | 9 | 8 | 7 | 6 | 5 | 4 | 3 | 2 | 1 | 0 |

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- GFP frame mapping into Plesiochronous Digital Hierarchy (PDH); G.8040/Y.1340 (09/05). *ITU-T STANDARD IN FORCE (I),* 06 September 2005

- Generic framing procedure (GFP); G.7041/Y.1303 (08105). *ITU-T STANDARD IN FORCE (I),* 22 August 2005
- *Application Note 3849 - Ethernet-over-PDH Technology Overview,* 30 May 2006